# EUROPÄISCHE PATENTSCHRIFT

(11) **EP 3 788 864 B1**
(45) Veröffentlichungstag und Bekanntmachung des Hinweises auf die Patenterteilung: **15.11.2023**
(21) Anmeldenummer: 20193582.2
(22) Anmeldetag: 31.08.2020
(51) Int. Cl.: A01D 89/00

(54) **AUFNAHMEVORRICHTUNG FÜR EINE LANDWIRTSCHAFTLICHE ARBEITSMASCHINE, LANDWIRTSCHAFTLICHE ARBEITSMASCHINE UND ARBEITSZUG MIT EINER SOLCHEN LANDWIRTSCHAFTLICHEN ARBEITSMASCHINE**
MOUNTING DEVICE FOR AN AGRICULTURAL WORKING MACHINE, AGRICULTURAL WORKING MACHINE AND WORK TRAIN WITH SUCH AN AGRICULTURAL WORKING MACHINE
DISPOSITIF DE MONTAGE POUR MACHINE DE TRAVAIL AGRICOLE, MACHINE DE TRAVAIL AGRICOLE ET ATTELAGE POURVUE D'UNE TELLE MACHINE DE TRAVAIL AGRICOLE

(30) Priorität: 06.09.2019 DE 102019006298
(43) Veröffentlichungstag der Anmeldung: 10.03.2021
(73) Patentinhaber: Maschinenfabrik Bernard Krone GmbH & Co. KG, 48480 Spelle (DE)
(72) Erfinder: Roters, Sebastian, 48624 Schöppingen (DE); Enslein, Lukas, 95685 Falkenberg (DE)

(56) Entgegenhaltungen:
- EP-B1- 1 048 195
- DE-U1- 29 713 081
- DE-U1-202008 007 284
- DE-U1-202011 101 157

## Beschreibung

Die vorliegende Erfindung betrifft eine Aufnahmevorrichtung nach Anspruch 1.

Die vorliegende Erfindung betrifft weiterhin eine landwirtschaftliche Arbeitsmaschine mit einer solchen Aufnahmevorrichtung sowie einen Arbeitszug mit einer Zugmaschine und einer solchen landwirtschaftlichen Arbeitsmaschine. Landwirtschaftliche Arbeitsmaschinen, beispielsweise Rund- oder Quaderballenpressen, Ladewagen und Feldhäcksler, weisen zum Aufnehmen von Erntegut vom Boden regelmäßig eine Aufnahmevorrichtung auf, die bodenkopierend geführt ist. Die Aufnahmevorrichtung ist durch Höhenverstellen an das Erntegut und/oder die Bodenverhältnisse anpassbar. Dafür weisen solche Aufnahmevorrichtungen seitlich jeweils ein Rad auf, mit denen sich die Aufnahmevorrichtung vom Boden abstützt.

Um zu verhindern, dass die Räder den Gutfluss beim Einziehen in die Aufnahmevorrichtung behindern, sind sie in Arbeitsstellung verhältnismäßig weit von der Aufnahmevorrichtung beabstandet angeordnet. Dies erlaubt auch einen größeren Pendelbereich der Räder. Zudem werden heute Aufnahmevorrichtungen mit maximaler Breite verwendet, um möglichst breite Schwade aufnehmen zu können und so sehr wirtschaftlich zu arbeiten. Die Aufnahmevorrichtung ist dann im Wesentlichen an die bei Straßenfahrt zulässige Fahrzeugbreite angepasst. Solche Aufnahmevorrichtungen können mit ihren Rädern in Arbeitsstellung, die beim Bearbeiten des Feldes eingenommen wird, die maximale Fahrzeugbreite überschreiten.

Daher ist es bekannt, die Räder von der Aufnahmevorrichtung abnehmbar vorzusehen. Weiterhin ist ein Verstellen der Räder aus der Arbeitsstellung in eine Transportstellung bekannt, in der die Räder so an der landwirtschaftlichen Arbeitsmaschine angeordnet sind, dass diese die zulässige Fahrzeugbreite nicht mehr überschreitet. Oftmals erfolgt dies manuell, so dass ein Bediener der landwirtschaftlichen Arbeitsmaschine für das Verstellen der Räder von der Arbeitsstellung in die Transportstellung oder zurück seine Fahrerkabine verlassen muss.

Ein solches manuell betätigtes Verschwenken eines Stützrades offenbart die Druckschrift DE 297 13 081 U1.

Die Druckschrift EP 1 048 195 B1 offenbart eine Schwenkeinrichtung für ein Anbaugerät für landwirtschaftliche Maschinen, dessen Stützräder mittels mehrerer schwenkbarer Koppelhebel von einer die Breite des Anbaugerätes vergrößernden in eine die Breite des Anbaugerätes verringernde Stellung schwenkbar sind. Die Schwenkeinrichtung kann Hydraulikzylinder aufweisen, um das Verschwenken von einem Fahrerstand aus zu betätigen.

Aufgabe der Erfindung ist es, eine zum Stand der Technik alternative höhenverstellbare Aufnahmevorrichtung zu schaffen, deren Höhe an unterschiedliche Bodenverhältnisse sowie unterschiedliches Erntegut insbesondere stufenlos anpassbar ist, deren Räder, insbesondere von der Fahrerkabine aus, automatisch von einer Arbeitsstellung in eine Transportstellung verstellbar sind, die, insbesondere bezüglich der Bauteilezahl für die Radverstellung, wenig aufwändig aufgebaut ist, und die kostengünstig herstellbar ist, sowie eine landwirtschaftliche Arbeitsmaschine mit einer solchen Aufnahmevorrichtung.

Die Aufgabe wird gelöst mit einer Aufnahmevorrichtung mit den Merkmalen des unabhängigen Patentanspruchs 1, mit einer landwirtschaftlichen Arbeitsmaschine mit den Merkmalen des unabhängigen Patentanspruchs 8, sowie mit einem Arbeitszug mit den Merkmalen des unabhängigen Patentanspruchs 9. Vorteilhafte

Ausführungsformen sind den abhängigen Ansprüchen entnehmbar.

Dafür wird eine Aufnahmevorrichtung für eine landwirtschaftliche Arbeitsmaschine geschaffen. In einer bevorzugten Ausführungsform ist die Aufnahmevorrichtung eine Pick- up. Die landwirtschaftliche Arbeitsmaschine ist bevorzugt eine Ballenpresse, ein Ladewagen oder ein Feldhäcksler.

Die Aufnahmevorrichtung weist einen Aufnahmerotor sowie ein Rad auf. Dabei ist der Aufnahmerotor zur Aufnahme von Erntegut vom Boden vorgesehen. Das Rad ist seitlich des Aufnahmerotors angeordnet. Es ist automatisch von einer Arbeitsstellung, in der es zum Führen der Aufnahmevorrichtung über den Boden vorgesehen ist, und in der die Aufnahmevorrichtung eine Arbeitsbreite aufweist, in eine Transportstellung reversibel verstellbar, in der die Aufnahmevorrichtung eine gegenüber der Arbeitsbreite geringere Transportbreite aufweist. Dabei kann die automatische Verstellung des Rades vom Bediener oder eine Steuerungsvorrichtung ausgelöst werden. In der Transportstellung ist das Rad in einer vom Boden abgehobenen Position angeordnet.

Die Aufnahmevorrichtung ist in der Arbeitsstellung des Rades mittels eines Aktors höhenverstellbar.

Der Aktor ist bevorzugt sowohl zur Höhenverstellung der Aufnahmevorrichtung in Arbeitsstellung als auch zur automatischen Verstellung des Rades von der Arbeitsstellung in die Transportstellung eingerichtet ist. Für die Verstellung des Rades von der Arbeitsstellung in die Transportstellung wird daher derselbe Aktor verwendet, der ohnehin für die Höhenverstellung der Aufnahmevorrichtung in der Arbeitsstellung benötigt wird. Die Verstellung von der Arbeitsstellung in die Transportstellung ist daher mit wenigen Bauteilen auf sehr kostengünstige Weise realisiert.

Dabei ist es bevorzugt, dass der Aktor ein Linearaktor ist. Besonders bevorzugt ist er ein elektrischer, hydraulischer oder elektrohydraulischer Linearaktor. Ganz besonders bevorzugt ist er ein elektrohydraulischer, doppelwirkender Zylinder. In der Ausführungsform als doppelwirkender Zylinder ist der Linearaktor sowohl in eine Ausfahrrichtung des Kolbens als auch in eine Einfahrrichtung des Kolbens aktiv betätigbar. Dadurch ist der Zylinder in beide Richtungen steuerbar. Ein solcher Zylinder ermöglicht daher ein stufenloses Verstellen der Aufnahmevorrichtung insbesondere während des Höhenverstellens und/oder insbesondere im Betrieb der landwirtschaftlichen Arbeitsmaschine.

Das Rad ist von der Arbeitsstellung in die Transportstellung entlang einer Raumbahn verstellbar. Die Verstellung des Rades entlang der Raumbahn ermöglicht einen langen Verstellweg des Rades von der Arbeitsstellung in die Transportstellung. Dadurch kann das Rad in der Arbeitsstellung, insbesondere seitlich des Aufnahmerotors, verhältnismäßig weit von dem Aufnahmerotor beabstandet sein, wobei es in der Transportstellung im Wesentlichen seitlich anliegend oder sogar hinter einem Lager des Niederhalters anordbar ist. Zudem ermöglicht die Verstellung des Rades entlang der Raumbahn die Nutzung nur eines einzigen Tragarms für das Rad. Insgesamt ist die Anzahl der Bauteile der Aufnahmevorrichtung daher sehr gering. Die Aufnahmevorrichtung ist daher ebenfalls kostengünstig herstellbar.

Besonders bevorzugt weist die Aufnahmevorrichtung an beiden Enden des Aufnahmerotors jeweils ein Rad auf, wobei jedes der Räder jeweils mittels desselben an diesem Ende angeordneten Aktors in Arbeitsstellung höhenverstellbar sowie von der Arbeitsstellung in die Transportstellung und zurück verstellbar ist, und/oder entlang der Raumbahn verstellbar ist. Da die Räder jeweils endseitig des Aufnahmerotors angeordnet sind, sind sie leicht zugänglich und einfach wartbar.

Im Folgenden wird die Erfindung anhand eines einzigen Rades beschrieben.

Bevorzugt ist die automatische Verstellung des Rades von der Arbeitsstellung in die Transportstellung oder zurück in einem einzigen Bewegungsablauf durchführbar. Weiterhin bevorzugt ist die automatische Verstellung des Rades auch während der Höhenverstellung der Aufnahmevorrichtung in der Arbeitsstellung in einem einzigen Bewegungsablauf durchführbar. Dabei erfolgt das Verstellen des Rades daher unterbrechungsfrei und kann schnell durchgeführt werden. Vorzugsweise erfolgt das Verstellen von der Arbeitsstellung in die Transportstellung in eine vertikale Richtung nach oben sowie gleichzeitig in oder gegen eine Erstreckungsrichtung des Aufnahmerotors zu diesem hin. Dabei ist es weiterhin bevorzugt, dass der Bewegungsablauf eine Schwenkbewegung ist.

Das Rad ist dafür an einem Tragarm angeordnet, der mittels eines feststehenden Führungselementes an einen Rahmen der Aufnahmevorrichtung angelenkt ist. Dabei sind das Rad bevorzugt an einem Ende des Tragarms und das feststehende Führungselement an einem anderen Ende des Tragarms vorgesehen. Der Tragarm ist bevorzugt als Vierkantrohr oder Rundrohr ausgebildet. In dieser Ausführungsform ist er sehr robust. Zudem ist er kostengünstig herstellbar.

Das feststehende Führungselement kann ein Bolzen sein. Um den Bewegungsablauf in die vertikale Richtung nach oben und/oder in oder gegen die Erstreckungsrichtung des Aufnahmerotors zu diesem hin zu ermöglichen, ist es bevorzugt, dass sich der Bolzen vom Rahmen aus jeweils in einem Winkel zur vertikalen Richtung, zur Erstreckungsrichtung und zur Fahrtrichtung erstreckt. Der Bolzen erstreckt sich vom Rahmen ausgehend daher schräg in den Raum hinein. Dabei sind die vertikale Richtung, die Erstreckungsrichtung und die Fahrtrichtung jeweils quer zueinander angeordnet. Dies ermöglicht die Verstellung entlang der Raumbahn von der weit von dem Aufnahmerotor beabstandeten Arbeitsstellung in die im Wesentlichen anliegend seitlich oder sogar hinter dem Aufnahmerotor vorgesehene Transportstellung. Dabei dreht sich der Tragarm auf einer Kreisbahn um den Bolzen.

Die Aufnahmevorrichtung zeichnet sich dadurch aus, dass das feststehende Führungselement ein mindestens zwei Freiheitsgrade aufweisendes Gelenk ist. Da das Gelenk mindestens zwei Freiheitsgrade aufweist, und daher zwei Rotationsrichtungen ermöglicht, ist mit ihm die räumliche Verstellung des Tragarms entlang der Raumbahn, vorzugsweise in sowohl einer vertikalen als auch in einer horizontalen Richtung, möglich. Eine solche Verstellung ist prinzipiell auch durch Nutzung von zwei Drehgelenken erreichbar. Durch die Nutzung nur eines einzigen zumindest zwei Freiheitsgrade aufweisenden Gelenks ist jedoch die Bauteilezahl, und somit ein Montageaufwand sowie ein Wartungsaufwand, geringer.

Als Gelenk ist bevorzugt ein Kugelgelenk vorgesehen. Vorzugsweise umfasst das Kugelgelenk eine Kugel, die an einem Bolzen befestigt sein kann, sowie einen Gelenkkopf, der korrespondierend zur Kugel ausgebildet ist, so dass er in drei Rotationsrichtungen um die Kugel drehbar ist. In dieser Ausführungsform ist am Tragarm bevorzugt ein Stützelement festgelegt, das den Tragarm gegen eine Rotation in eine der drei Rotationsrichtungen abstützt. Das Stützelement verringert daher die drei Freiheitsgrade des Kugelgelenks. Dadurch kann sich der Tragarm nur noch in zwei Rotationsrichtungen um das Kugelgelenk drehen. Dadurch wird ein Verkippen des Rades beim Höhenverstellen sowie beim Verschwenken von der Arbeitsstellung in die Transportstellung sowie in der Arbeitsstellung unter Arbeitslast verhindert.

Zum Führen des Tragarms während des Verstellens von der Arbeitsstellung in die Transportstellung oder zurück können Rollen und/oder Kulissen vorgesehen sein. Eine Ausführungsform, bei der am Tragarm befestigte Rollen in sie umgebende Kulissenbahnen geführt sind, baut jedoch sehr breit.

In einer alternativen Ausführungsform weist die Aufnahmevorrichtung dafür eine Scheibe oder Keile mit einer Kontur auf, die als Führungsbahn für den Tragarm dient. Vorzugsweise wird der Tragarm beim Verschwenken von der Arbeitsstellung in die Transportstellung oder zurück entlang der Führungsbahn geführt, so dass sich der Tragarm entlang der Raumbahn verstellt.

Vorzugsweise ist der Tragarm an zumindest zwei Lagerungspunkten am Rahmen gelagert ist. Das Gelenk stellt dabei den ersten Lagerungspunkt und der Aktor den zweiten Lagerungspunkt dar. Vorzugsweise ist zudem eine Strebe zwischen dem Tragarm und dem Rahmen der Aufnahmevorrichtung befestigt, die den Abstand des Tragarms vom Rahmen während des Verstellens des Aktors bestimmt. In dieser Ausführungsform ist die Strebe im zweiten Lagerungspunkt gelagert.

Es ist aber besonders bevorzugt, dass der Tragarm an drei Lagerungspunkten am Rahmen gelagert ist. Das Gelenk stellt dabei den ersten Lagerungspunkt und der Aktor den zweiten Lagerungspunkt dar. Auch in dieser Ausführungsform bestimmt der dritte Lagerungspunkt den Abstand des Tragarms vom Rahmen. Dabei durchfährt das Rad während der Schwenkbewegung bevorzugt im Wesentlichen einen Viertelkreis. Dafür ist es bevorzugt, dass der Tragarm mittels der Strebe in einem dritten Lagerungspunkt am Rahmen der Aufnahmevorrichtung befestigt ist. Die Länge der Strebe bestimmt den Viertelkreis.

Die Länge ist bevorzugt so gewählt, dass sie eine nahezu geradlinige, vertikale Verstellung während der Höhenverstellung der Aufnahmevorrichtung in der Arbeitsstellung ermöglicht. Weiterhin bevorzugt ermöglicht sie eine nahezu geradlinige, horizontale Verstellung des Rades unmittelbar bevor diese die Transportstellung erreicht. Dadurch kann das Rad hinter die Aufnahmevorrichtung oder Bauteile der Aufnahmevorrichtung oder sogar zwischen Bauteile der Aufnahmevorrichtung positioniert werden. Zudem ermöglicht sie bevorzugt einen großen Verstellweg sowohl in vertikaler als auch horizontaler Richtung zwischen der Höhenverstellung und dem Erreichen der Transportstellung. Insgesamt ist das Verstellen dadurch schnell möglich.

In einer bevorzugten Ausführungsform ist die Strebe sowohl am Tragarm als auch am Rahmen jeweils mittels eines mindestens zwei Freiheitsgrade aufweisenden Strebengelenks, insbesondere jeweils mittels eines Kugelgelenks, angelenkt. Für die Strebengelenke können Normbauteile verwendet werden. Die Strebe und ihre Anlenkung an den Rahmen sowie an den Tragarm sind dann kostengünstig herstellbar.

Es ist weiterhin bevorzugt, dass die Aufnahmevorrichtung einen Niederhalter umfasst und das Rad in der Transportstellung in einer Fahrtrichtung hinter dem Niederhalter positioniert ist. Dabei liegt das Rad im Wesentlichen am Rahmen an. Es ist dann sehr platzsparend hinter einem Lager des Aufnahmerotors positioniert.

Die Aufgabe wird weiterhin gelöst mit einer landwirtschaftlichen Arbeitsmaschine, insbesondere mit einer Ballenpresse, einem Ladewagen oder einem Feldhäcksler, mit einer solchen Aufnahmevorrichtung. Durch die Nutzung nur eines einzigen Aktors, eines einzigen Tragarms und mehrerer zumindest zwei Freiheitsgrade aufweisender Gelenke in den Lagerungspunkten ist die Bauteilezahl, die für die Höhenverstellung sowie die Verstellung des Rades von der Arbeitsstellung in die Transportstellung und zurück erforderlich ist, sehr klein. Dadurch ist die Montage einfach und wenig aufwändig, und der Aufwand für die Lagerhaltung gering. Zudem ist die Verstellung dadurch in einem einzigen, unterbrechungsfreien, fließenden und dadurch schnellen Bewegungsablauf möglich.

Vorzugsweise weist die Aufnahmevorrichtung und/oder die landwirtschaftliche Arbeitsmaschine Sensoren auf, mit denen die Höhe der Aufnahmevorrichtung und/oder des Rades erfassbar ist. Dabei ist es besonders bevorzugt, dass eine Position eines Endes des Linearaktors und/oder seiner Länge erfasst wird. Denkbar ist aber auch das Vorsehen einer Kamera. Die erfasste Höhe kann in einer Fahrerkabine angezeigt werden.

Die Aufgabe wird weiterhin gelöst mit einem Arbeitszug mit einem Zugfahrzeug sowie einer solchen landwirtschaftlichen Arbeitsmaschine, wobei der Arbeitszug zur Höhenverstellung der Aufnahmevorrichtung und/oder zur automatischen Verstellung des Rades von der Arbeitsstellung in die Transportstellung oder zurück wenigstens eine Betätigungsvorrichtung umfasst, die an der Zugmaschine und/oder an der landwirtschaftlichen Arbeitsmaschine angeordnet ist.

Bei Anordnung einer solchen Betätigungsvorrichtung in einer Fahrerkabine des Zugfahrzeugs muss der Bediener die Fahrerkabine des Zugfahrzeugs nicht verlassen, um in der Arbeitsstellung die Höhenverstellung oder das Verstellen des Rades von der Arbeitsstellung in die Transportstellung oder zurück vorzunehmen. Dadurch kann eine Höhe der Aufnahmevorrichtung während des Betriebs von der Fahrerkabine aus vorgenommen werden. Dadurch wird ein Aufenthalt eines Bedieners im Bereich des Rades, insbesondere beim Verstellen des Rades von der Arbeitsstellung in die Transportstellung oder zurück, vermieden. Eine Verletzungsgefahr für den Bediener kann dadurch vermieden werden.

Auch bei Anordnen einer Betätigungsvorrichtung an der landwirtschaftlichen Maschine kann die Position der Betätigungsvorrichtung so gewählt sein, dass keine Verletzungsgefahr für den Bediener besteht. Zudem kann vorgesehen sein, dass ein Schalter oder Hebel der Betätigungsvorrichtung während des gesamten Verstellens des Rades durchgehend betätigt werden muss. Dadurch bleibt die Aufmerksamkeit des Bedieners während des Verstellens kontinuierlich auf diesen Vorgang gerichtet, was die Gefahr einer Fehlbedienung minimiert.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch einen Arbeitszug umfassend ein Zugfahrzeug und eine erfindungsgemäße landwirtschaftliche Arbeitsmaschine;
- Fig. 2: in (a) einen Ausschnitt aus einer weiteren Ausführungsform einer erfindungsgemäßen landwirtschaftlichen Arbeitsmaschine in einer Seitenansicht, die eine erfindungsgemäße Aufnahmevorrichtung mit einem Rad in einer Arbeitsstellung zeigt, wobei die Aufnahmevorrichtung an einem Rahmen der landwirtschaftlichen Arbeitsmaschine angeordnet ist, und in (b) eine Frontansicht des Ausschnitts der Fig. 2 (a);
- Fig. 3: den Ausschnitt der Fig. 2 (a) in der Seitenansicht, wobei das Rad in einer Transportstellung angeordnet ist, und in (b) die Frontansicht des Ausschnitts der Fig. 3 (a); und
- Fig. 4: eine perspektivische Ansicht eines Ausschnitts der landwirtschaftlichen Arbeitsmaschine aus den Fig. 2 und 3 mit dem Rad in Arbeitsstellung.

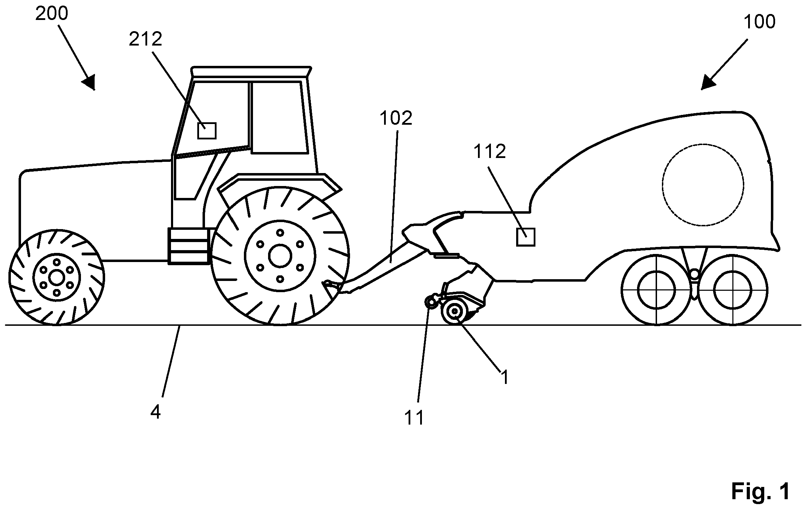

Fig. 1 zeigt schematisch einen Arbeitszug umfassend ein Zugfahrzeug 200 und eine erfindungsgemäße landwirtschaftliche Arbeitsmaschine 100. Bei der landwirtschaftlichen Arbeitsmaschine 100 handelt es sich um eine Ballenpresse, hier eine Rundballenpresse. Im Folgenden werden die Begriffe landwirtschaftliche Arbeitsmaschine 100, Ballenpresse und Rundballenpresse daher synonym verwendet. Die Erfindung ist aber nicht auf Rundballenpressen beschränkt sondern auch auf andere landwirtschaftliche Arbeitsmaschinen 100 anwendbar, beispielsweise auf andere Ballenpressen wie Quaderballenpressen oder Brikettierpressen, oder auf Ladewagen.

Die Rundballenpresse 100 ist mittels einer Deichsel 102 an das Zugfahrzeug 200 angehängt. Es handelt sich bei der Rundballenpresse 100 hier daher um eine gezogene landwirtschaftliche Arbeitsmaschine 100. Die Erfindung ist aber auch auf selbstfahrende landwirtschaftliche Arbeitsmaschinen 100 anwendbar, beispielsweise auf Feldhäcksler.

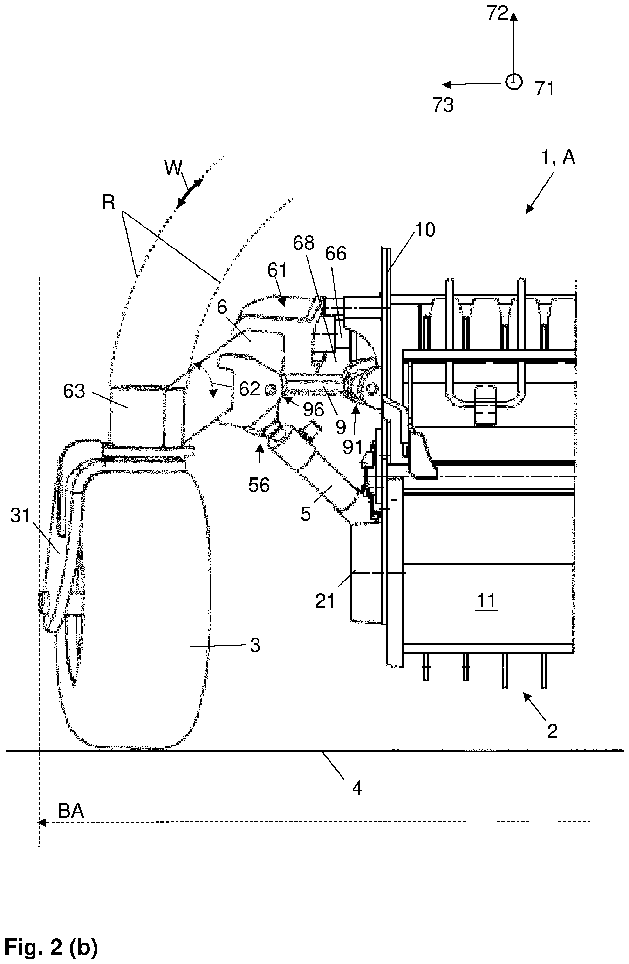

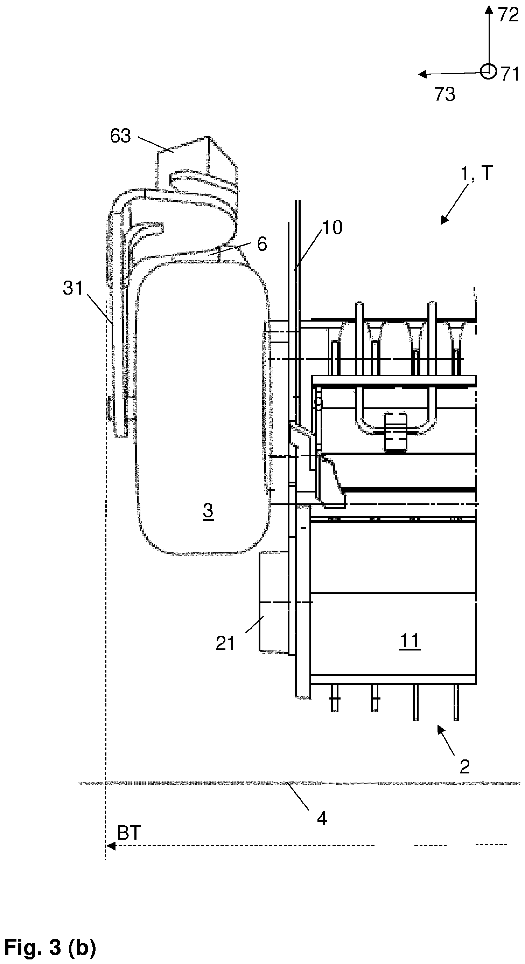

Die Rundballenpresse 100 weist eine Aufnahmevorrichtung 1, hier eine Pick- up, auf, die einen Aufnahmerotor 2 (s. Fig. 2 (b), 3 (b)) umfasst, der zum Aufnehmen von Erntegut (nicht gezeigt) wie beispielsweise Heu oder Stroh vom Boden 4 vorgesehen ist. Die Begriffe Aufnahmevorrichtung 1 und Pick- up werden daher im Folgenden synonym verwendet.

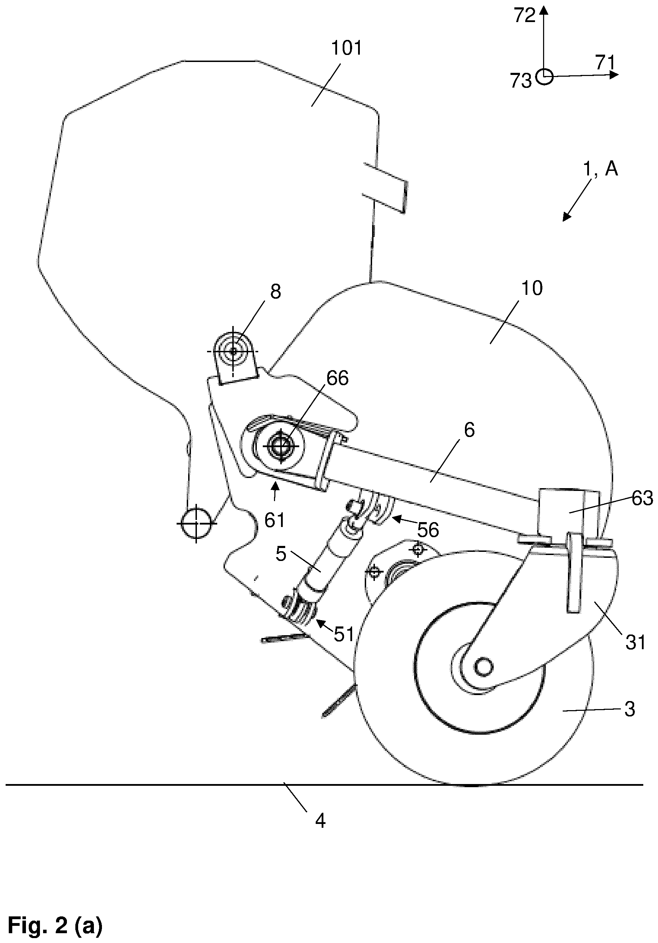

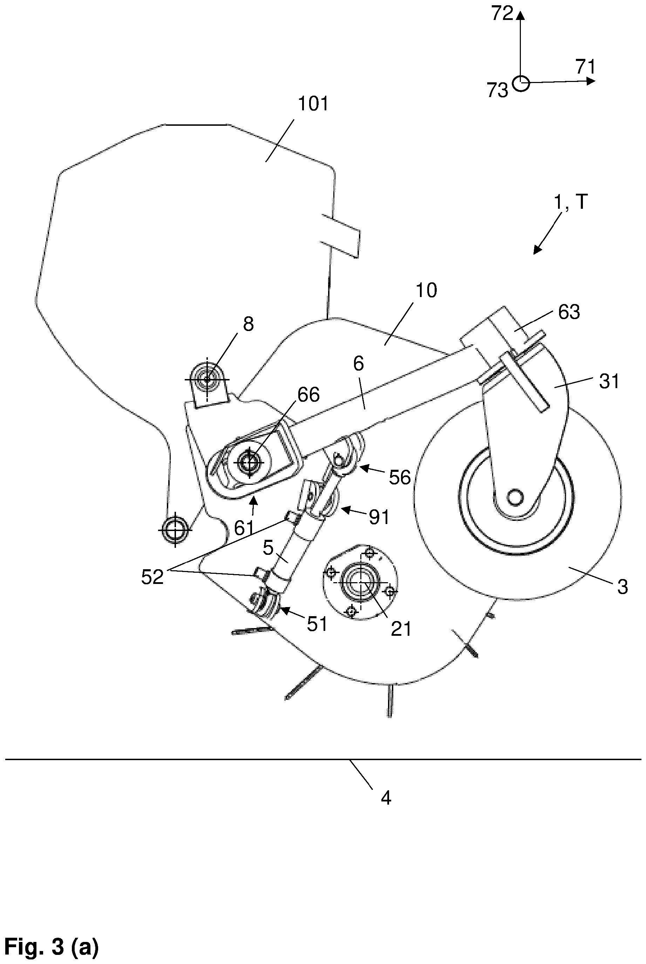

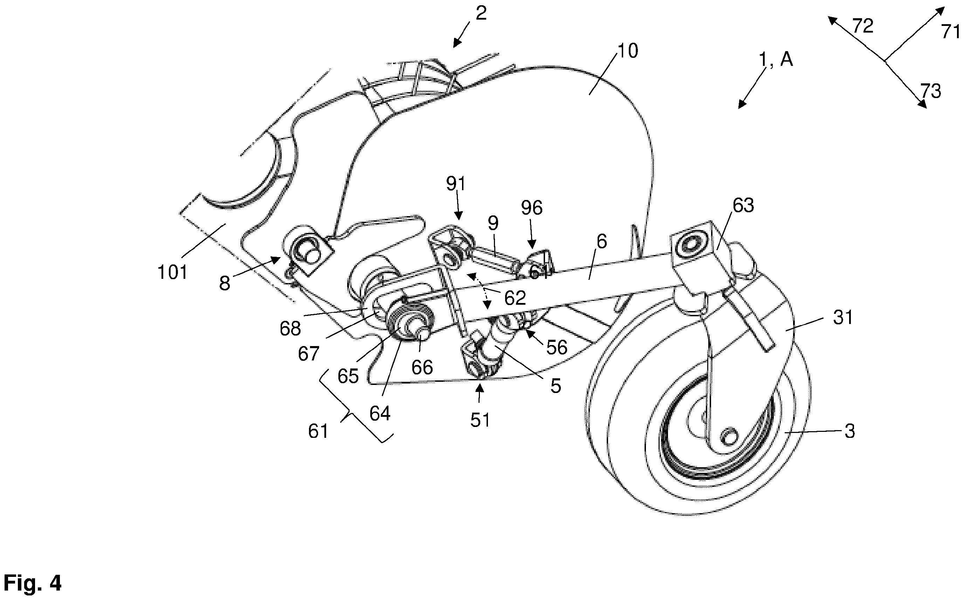

Die Aufnahmevorrichtung 1 weist ein Rad 3 (s. Fig. 2, 3) auf, insbesondere ein Tastrad, mit dem sie in einer Arbeitsstellung A (s. Fig. 2, 4) bodenkopierend über den Boden 4 geführt ist. Dabei ist an jeder Seite (nicht bezeichnet) des Aufnahmerotors 2 jeweils ein solches Rad 3 angeordnet.

Zudem weist die Aufnahmevorrichtung 1 einen Niederhalter 11 auf, der in einer Fahrtrichtung 71 (s. Fig. 2) vor dem Aufnahmerotor 2 angeordnet ist und das Abheben des Ernteguts vom Boden 4 begünstigt.

Die Aufnahmevorrichtung 1 ist mittels mindestens eines Halteaktors (nicht gezeigt), vorzugsweise eines hydraulischen Zylinders, in eine vom Boden 4 abgehobene Position (nicht bezeichnet, s. Fig. 3) anhebbar. Zudem ist die Aufnahmevorrichtung 1 während der Feldbearbeitung, in der sie sich in der Arbeitsstellung A befindet, höhenverstellbar vorgesehen.

In der Arbeitsstellung A sind die Räder 3 jeweils in einer Erstreckungsrichtung 73 des Aufnahmerotors 2 seitlich der Aufnahmevorrichtung 1 angeordnet und weit vom Aufnahmerotor 2 beabstandet. Die Aufnahmevorrichtung 1 weist dann eine Arbeitsbreite BA auf, die durch einen Abstand der Räder 3 voneinander und/oder ihre Aufhängung bestimmt ist (s. Fig. 2 (b)). Dabei ist die Aufhängung hier eine Schwinge 31. Durch die weit vom Aufnahmerotor 2 beabstandete Anordnung der Räder 3 überschreitet eine solche Aufnahmevorrichtung 1 oftmals die für die Straßenfahrt erlaubten Höchstgrenzen für die Fahrzeugbreite.

Die Räder 3 der Aufnahmevorrichtung 1 sind hier daher zudem von der Arbeitsstellung A in eine Transportstellung T verstellbar, in der die Aufnahmevorrichtung 1 eine gegenüber der Arbeitsbreite BA in der Arbeitsstellung A geringere Transportbreite BT aufweist (s. Fig. 3 (b)).

Dafür wird an beiden Seiten des Aufnahmerotors 2 jeweils ein Aktor 5 verwendet, der auch für die Höhenverstellung der Aufnahmevorrichtung 1 in der Arbeitsstellung A genutzt wird. Das Verstellen der Räder 3 von der Arbeitsposition A in die Transportposition T erfolgt bei vom Boden 4 abgehobener Aufnahmevorrichtung 1. Die Aufnahmevorrichtung 1 wird dafür mittels des Halteaktors angehoben. Ein für die Höhenverstellung in der Arbeitsposition A vorgesehener Verfahrweg (nicht bezeichnet) der Aktoren 5 ist dafür lediglich verlängert und geht daher über den der Höhenverstellung hinaus.

Zum Höhenverstellen der Aufnahmevorrichtung 1 sowie zum Verstellen der Räder 3 von der Arbeitsstellung A in die Transportstellung T oder zurück sind hier schematisch Betätigungsvorrichtungen 112, 212 dargestellt. Zum einen weist die landwirtschaftliche Arbeitsmaschine 100 selbst eine solche Betätigungsvorrichtung 112 auf. Zudem ist eine solche Betätigungsvorrichtung 212 in einer Fahrerkabine (nicht bezeichnet) des Zugfahrzeugs 200 angeordnet. Mit der Betätigungsvorrichtung 112, 212 sind bevorzugt nicht nur die Aktoren 5 für die Höhenverstellung und/oder das reversible Verstellen der Räder 3 von der Arbeitsstellung A in die Transportstellung T steuerbar, sondern zudem auch der Halteaktor für das Anheben der Aufnahmevorrichtung 1. Das Höhenverstellen in Arbeitsstellung A, Anheben der Aufnahmevorrichtung 1 sowie das Verstellen der Räder 3 von der Arbeitsstellung A in die Transportstellung T wird hier daher an einer der Betätigungsvorrichtungen 112, 212 vom Bediener händisch ausgelöst.

Fig. 2 zeigt in (a) einen Ausschnitt aus einer weiteren Ausführungsform einer erfindungsgemäßen landwirtschaftlichen Arbeitsmaschine 100 in einer Seitenansicht, die eine erfindungsgemäße Aufnahmevorrichtung 1 mit einem Rad 3 in einer Arbeitsstellung A zeigt, wobei die Aufnahmevorrichtung 1 an einem Rahmen 10 der landwirtschaftlichen Arbeitsmaschine 100 angeordnet ist, und in (b) eine Frontansicht des Ausschnitts der Fig. 2 (a). An einem diesem Ende (nicht bezeichnet) der Aufnahmevorrichtung 1 gegenüber liegenden Ende (nicht bezeichnet) weist die Aufnahmevorrichtung 1 eine an einer Mittelebene (nicht gezeigt) gespiegelte aber ansonsten gleiche Anordnung auf.

Die Aufnahmevorrichtung 1 ist an ihren beiden Enden jeweils an einem Anlenkpunkt 8 mittels eines Achsstummels (nicht bezeichnet) an eine Struktur 101 der landwirtschaftlichen Arbeitsmaschine 100 drehbar gelagert. Sie ist durch Längenverstellen des Halteaktors um den Anlenkpunkt 8 drehbar. Dadurch kann sie in die vom Boden 4 abgehobene Position verstellt werden. Diese Position zeigt Fig. 3.

Fig. 2 zeigt demgegenüber die Arbeitsstellung A der Aufnahmevorrichtung 1. In der Arbeitsstellung A stützt sich die Aufnahmevorrichtung 1 mittels der endseitig angeordneten Räder 3 vom Boden 4 ab. Die Räder 3 sind jeweils mittels einer Radanbindung am Rahmen 10 der Aufnahmevorrichtung 1 befestigt. Die Radanbindung ist in den Fig. 2 - 4 dargestellt und wird im Folgenden anhand nur eines der Räder 3 beschrieben.

Um die Höhe der Aufnahmevorrichtung 1 an Bodengegebenheiten und/oder das Erntegut anpassen zu können, ist die Aufnahmevorrichtung 10 in der Arbeitsstellung A höhenverstellbar, indem jeweils der Aktor 5 betätigt wird.

Der Aktor 5 ist dafür hier mit einem ersten Ende (nicht bezeichnet) an einem in einer vertikalen Richtung 72 unteren Ende (nicht bezeichnet) des Rahmens 10 an einem ersten Lagerpunkt (nicht bezeichnet) der Aufnahmevorrichtung 1 befestigt. Er ist hier als doppelwirkender elektrohydraulischer Zylinder 5 ausgebildet, so dass er sowohl beim Ausfahren als auch beim Einfahren steuerbar ist. Der Rahmen 10 der Aufnahmevorrichtung 1 ist hier durch ein Seitenblech des Aufnahmevorrichtung 1 gebildet. Als Befestigung ist dafür ein Kugelgelenk 51 vorgesehen.

An einem dem ersten Ende gegenüber liegenden zweiten Ende (nicht bezeichnet) ist der Aktor 5 ebenfalls mittels eines Kugelgelenks 56 an einem Tragarm 6 angelenkt. Die Anlenkung ist etwa mittig des Tragarms 6 vorgesehen.

Der Tragarm 6 trägt das Rad 3. Er ist dafür am Rahmen 10 der Aufnahmevorrichtung 1 in einem zweiten Lagerpunkt (nicht bezeichnet) befestigt. Dafür ist ein Bolzen 66 vorgesehen, der sich in die Erstreckungsrichtung 73 erstreckt. Der Bolzen 66 ist am Rahmen 10 angeschweißt. Er kann auch am Rahmen 10 angeschraubt oder anderweitig gefügt sein. Am Bolzen 66 ist eine Kugel 65 festgelegt. Da die Kugel 65 am Bolzen 66 festgelegt ist, ermöglicht sie keine translatorische Bewegung.

Der Tragarm 6 weist an seinem ersten Ende (nicht bezeichnet) einen Gelenkkopf 64 auf, der korrespondierend zur Kugel 65 ausgebildet ist. Dadurch kann sich der Gelenkkopf 64 in drei Rotationsrichtungen (nicht dargestellt) um die Kugel 65 drehen. Der Gelenkkopf 64 und die Kugel 65 bilden ein erstes Gelenk 61 des Tragarms 6.

An einem dem ersten Ende gegenüber liegenden zweiten Ende (nicht bezeichnet) ist das Rad 3 über ein Pendellager 63 und eine Schwinge 31 am Tragarm 6 befestigt. Das Pendellager 63 ist vorgesehen, um eine zur Fahrtrichtung 71 winkelige Stellung des Rades 3 bei Kurvenfahrt zu ermöglichen.

Ein Verkippen des Rades 3 um eine der drei Rotationsrichtungen, das in Fig. 4 durch einen gestrichelten Pfeil 62 schematisch gezeigt ist, wird verhindert, indem am Tragarm 6 ein Stützelement 67 festgelegt ist. Das Stützelement 67 weist ein Langloch 68 auf. Es ist hier aus einem abgekanteten Blech gebildet. Der Bolzen 66 durchsetzt das Langloch 68. Der Tragarm 6 kann mittels des Langlochs 68 am Bolzen 66 ausgerichtet werden. Er dient zudem als Führung und verringert die drei Freiheitsgrade für die Rotation des Tragarms 6 um die Kugel 64 auf zwei Freiheitsgrade.

Eine kontrollierte Verstellung des Rades 3 wird durch eine Strebe 9 erreicht, die an einem dritten Lagerpunkt (nicht bezeichnet) am Rahmen 10 befestigt ist. Der dritte Lagerpunkt kann auch mit dem ersten Lagerpunkt zusammen fallen.

Die Strebe 9 ist etwa mittig des Tragarms 6 befestigt. Sie ist an einer Innenseite (nicht bezeichnet) des Tragarms 6 befestigt. Auch für die Befestigung der Strebe 9 am Rahmen 10 sowie am Tragarm 6 sind hier als Strebengelenke jeweils Kugelgelenke 91, 96 vorgesehen.

Bei einer Längenänderung des Aktors 5 wird der Gelenkkopf 64 des Tragarms 6 auf der Kugelhülle (nicht bezeichnet) der Kugel 65 entlang einer Bogenbahn geführt. Dadurch bewegt sich das Rad 3 entlang einer Raumbahn R. Die Länge des Tragarms 6 gibt dabei einen Radius der durchfahrbaren Raumbahn R vor.

Dabei sieht die Anordnung des Tragarms 6, des Aktors 5 sowie der Strebe 9 hier vor, dass der Tragarm 6 durch Ausfahren des Aktors 5, das heißt bei einem sich Verlängern des Aktors 5, von der Arbeitsstellung A in die Transportstellung T verstellt wird. Dabei wird das Rad 3 in vertikaler Richtung 72 nach oben und gleichzeitig in oder gegen die Erstreckungsrichtung 73 auf den Rahmen 10 der Aufnahmevorrichtung 1 zu verschwenkt. Die Bewegung, die das Rad 3 dabei ausführt, ist eine dreidimensionale Bewegung entlang der Raumbahn R im Raum.

Die Raumbahn R ist hier durch gestrichelte Linien, die die Bewegung des Pendellagers 63 zeigen, schematisch dargestellt. Sichtbar ist der bogenförmige Verlauf, der der Bogenbahn entspricht, die der Gelenkkopf 64 entlang der Kugelhülle überfährt. Der Verlauf entspricht etwa einem Viertelkreis.

Eine Breite BA, BT der Aufnahmevorrichtung 1 ist durch die Räder 3 und ihre Aufhängung am Tragarm 6, hier die Schwinge 31, bestimmt. In der Arbeitsposition A ist sie am breitesten. Dies zeigt Fig. 2 (b) anhand eines gestrichelt dargestellten Pfeils BA. In der Transportstellung T ist sie am geringsten. Dies zeigt Fig. 3 (b) anhand eines gestrichelten Pfeils BT.

Durch die Länge (nicht bezeichnet) der Strebe 9, ihren dritten Lagerpunkt am Rahmen 10 sowie die etwa mittige Anlenkung an den Tragarm 6 ist die beim Längenverändern des Aktors 5 durchfahrene Bogenbahn des Gelenkkopfes 64 entlang der Kugelhülle so gewählt, dass das Rad 3 sich während der Höhenverstellung der Aufnahmevorrichtung 1 in der Arbeitsstellung A entlang der Raumbahn R in eine nahezu geradlinige, vertikale Richtung 72 verstellt. In der Arbeitsstellung A behält das Rad 3 daher seinen Abstand (nicht bezeichnet) zum Aufnahmerotor 2 im Wesentlichen bei.

Kurz vor einem Erreichen der Transportstellung T ermöglicht diese Wahl ein nahezu geradliniges, horizontales Verstellen in oder gegen die Erstreckungsrichtung 73, so dass das Rad 3 nahezu parallel zum Rahmen 10 an diesen angelegt werden kann. Dazwischen wird das Rad 3 beim Verstellen von der Arbeitsstellung A in die Transportstellung T sowohl in vertikaler Richtung 72 als auch in oder gegen die Erstreckungsrichtung 73 stark verstellt. Das Verstellen von der Arbeitsstellung A in die Transportstellung T ist dadurch schnell, unterbrechungsfrei und in einem einzigen Bewegungsablauf möglich.

In der Transportstellung T ist das Rad 3 seitlich der Aufnahmerolle 2 hinter einem Lager 21 (s. Fig. 3) angeordnet. Da das Lager 21 die breiteste Stelle der Aufnahmevorrichtung 1 darstellt, ist die Breite der Aufnahmevorrichtung 1 dadurch minimiert.

Ein Verstellen der beiden Räder 3 der Aufnahmevorrichtung 1 von der Arbeitsstellung A in die Transportstellung T oder zurück kann durch ein Betätigen eines Betätigungsmittels (nicht dargestellt) der Betätigungsvorrichtung 112, 212 in der Fahrerkabine des Zugfahrzeugs 200 oder an der Ballenpresse 100 vorgenommen werden. Das Anheben oder Absenken der Aufnahmevorrichtung 1 mittels des Halteaktors und das Verstellen der Räder 3 von der Arbeitsstellung A in die Transportstellung T oder zurück ist vorteilhaft automatisch, beispielsweise durch eine Folgeschaltung, geregelt.

## Patentansprüche

1. Aufnahmevorrichtung (1), insbesondere Pick-up, für eine landwirtschaftliche Arbeitsmaschine, mit einem Aufnahmerotor (2) und einem Rad (3), wobei der Aufnahmerotor (2) zur Aufnahme von Erntegut vom Boden (4) vorgesehen ist, wobei das Rad (3) seitlich des Aufnahmerotors (2) angeordnet ist, wobei das Rad (3) an einem Tragarm (6) angeordnet ist, der mittels eines feststehenden Führungselementes an einen Rahmen (10) der Aufnahmevorrichtung (1) angelenkt ist, wobei das Rad (3) automatisch von einer Arbeitsstellung (A), in der es zum Führen der Aufnahmevorrichtung (1) über den Boden (4) vorgesehen ist, und in der die Aufnahmevorrichtung (1) eine Arbeitsbreite (BA) aufweist, in eine Transportstellung (T) reversibel verstellbar ist, in der die Aufnahmevorrichtung (1) eine gegenüber der Arbeitsbreite (BA) geringere Transportbreite (BT) aufweist, wobei die Aufnahmevorrichtung (1) in der Arbeitsstellung (A) des Rades (3) mittels eines Aktors (5) höhenverstellbar ist, wobei das Rad (3) von der Arbeitsstellung (A) in die Transportstellung (T) entlang einer Raumbahn (R) verstellbar ausgebildet ist, wobei der Aktor sowohl zur Höhenverstellung der Aufnahmevorrichtung (1) in Arbeitsstellung als auch zur automatischen Radverstellung des Rades (3) von der Arbeitsstellung (A) in die Transportstellung (T) eingerichtet ist,
**dadurch gekennzeichnet, dass**
das feststehende Führungselement ein mindestens zwei Freiheitsgrade aufweisenden Gelenk (61) ist.

2. Aufnahmevorrichtung (1) nach einem der vorherigen Ansprüche, **dadurch gekennzeichnet, dass** die automatische Verstellung des Rades (3) von der Arbeitsstellung (A) in die Transportstellung (T) in einem Bewegungsablauf, insbesondere durch eine einzige Schwenkbewegung, durchführbar ist.

3. Aufnahmevorrichtung (1) nach einem der vorherigen Ansprüche, **dadurch gekennzeichnet, dass** der Tragarm (6) an drei Lagerungspunkten (51, 61, 91) am Rahmen (10) gelagert ist.

4. Aufnahmevorrichtung (1) nach einem der vorherigen Ansprüche, **dadurch gekennzeichnet, dass** am Tragarm (6) ein Stützelement (67) festgelegt ist, das den Tragarm (6) gegen eine Rotation in eine Rotationsrichtung (62) abstützt.

5. Aufnahmevorrichtung (1) nach einem der vorherigen Ansprüche, **dadurch gekennzeichnet, dass** der Tragarm (6) mittels einer Strebe (9) am Rahmen (10) der Aufnahmevorrichtung (1) befestigt ist.

6. Aufnahmevorrichtung (1) nach einem der vorherigen Ansprüche, **dadurch gekennzeichnet, dass** die Strebe (9) sowohl am Tragarm (6) als auch am Rahmen (10) jeweils mittels eines mindestens zwei Freiheitsgrade aufweisenden Strebegelenks (91, 96) angelenkt ist.

7. Aufnahmevorrichtung (1) nach einem der vorherigen Ansprüche, **dadurch gekennzeichnet, dass** sie einen Niederhalter (11) umfasst und das Rad (3) in der Transportstellung (T) in einer Fahrtrichtung (71) hinter dem Niederhalter (11) positioniert ist.

8. Landwirtschaftliche Arbeitsmaschine (100), insbesondere Ballenpresse, Ladewagen oder Feldhäcksler, mit einer Aufnahmevorrichtung (1) nach einem der vorherigen Ansprüche.

9. Arbeitszug umfassend eine Zugmaschine und eine landwirtschaftliche Arbeitsmaschine (1) nach Anspruch 8, **dadurch gekennzeichnet, dass** er zur Höhenverstellung der Aufnahmevorrichtung (1) und/oder zur automatischen Verstellung des Rades (3) von der Arbeitsstellung (A) in die Transportstellung (T) wenigstens eine Betätigungsvorrichtung (12) umfasst, die an der Zugmaschine und/oder an der landwirtschaftlichen Arbeitsmaschine (100) angeordnet ist.

## Claims

1. Picking-up device (1), in particular a pick-up, for an agricultural working machine, comprising a picking-up rotor (2) and a wheel (3), the picking-up rotor (2) being provided for picking up crops from the ground (4), the wheel (3) being arranged on the side of the picking-up rotor (2), the wheel (3) being arranged on a support arm (6) which is articulated to a frame (10) of the picking-up device (1) by means of a stationary guide element, the wheel (3) being automatically and reversibly adjustable from a working position (A), in which the wheel is provided for guiding the picking-up device (1) over the ground (4) and in which the picking-up device (1) has a working width (BA), into a transport position (T), in which the picking-up device (1) has a smaller transport (BT) than the working width (BA), the picking-up device (1) being height-adjustable in the working position (A) of the wheel (3) by means of an actuator (5), the wheel (3) being designed to be adjustable from the working position (A) into the transport position (T) along a spatial path (R), the actuator being configured both for height adjustment of the picking-up device (1) and for automatic wheel adjustment of the wheel (3) from the working position (A) into the transport position (T),
**characterised in that**
the stationary guide element is a joint (61) having at least two degrees of freedom.

2. Picking-up device (1) according to any of the preceding claims, **characterised in that** the automatic adjustment of the wheel (3) from the working position (A) into the transport position (T) can be carried out in a movement sequence, in particular by a single pivoting movement.

3. Picking-up device (1) according to either of the preceding claims, **characterised in that** the support arm (6) is mounted on three bearing points (51, 61, 91) on the frame (10).

4. Picking-up device (1) according to any of the preceding claims, **characterised in that** a support element (67) is fixed on the support arm (6), which support element supports the support arm (6) against rotation in a direction of rotation (62).

5. Picking-up device (1) according to any of the preceding claims, **characterised in that** the support arm (6) is fastened to the frame (10) of the picking-up device (1) by means of a strut (9).

6. Picking-up device (1) according to any of the preceding claims, **characterised in that** the strut (9) is articulated both to the support arm (6) and to the frame (10) in each case by means of a strut joint (91, 96) having at least two degrees of freedom.

7. Picking-up device (1) according to any of the preceding claims, **characterised in that** it comprises a hold-down means (11) and the wheel (3) is positioned, in the transport position (T), behind the hold-down means (11) in a direction of travel (71).

8. Agricultural working machine (100), in particular a baling press, self-loading forage box or forage harvester, comprising a picking-up device (1) according to any of the preceding claims.

9. Work train comprising a towing machine and an agricultural working machine (1) according to claim 8, **characterised in that** the work train comprises at least one actuating device (12), which is arranged on the towing machine and/or on the agricultural working machine (100), for adjusting the height of the picking-up device (1) and/or for automatically adjusting the wheel (3) from the working position (A) into the transport position (T).

## Revendications

1. Dispositif ramasseur (1), notamment pick-up pour une machine agricole comportant un rotor ramasseur (2) et une roue (3),
- le rotor ramasseur (2) étant prévu pour ramasser du produit de récolte sur le sol (4),
- la roue (3) étant latéralement sur le rotor ramasseur (2),
- la roue (3) est reliée à un bras de support (6) qui est articulé par un élément de guidage fixe à un châssis (10) du dispositif ramasseur (1),
- la roue (3) est prévue pour passer automatiquement de manière réversible d'une position de travail (A) dans laquelle elle guide le dispositif ramasseur (1) sur le sol (4) et dans laquelle le dispositif ramasseur (1) a une largeur de travail (BA), à une position de transport (T), dans laquelle le dispositif ramasseur (1) a une largeur de transport (BT) inférieure à la largeur de travail (BA),
- le dispositif ramasseur (1) étant réglable en hauteur par un actionneur (5) dans la position de travail (A) de la roue (3),
- la roue (3) pouvant être déplacée de la position de travail (A) à la position de transport (T) selon un trajet (R) dans l'espace,
- l'actionneur étant conçu à la fois pour le réglage en hauteur du dispositif ramasseur (1) en position de travail et aussi pour le réglage automatique de la roue (3) pour passer de la position de travail (A) à la position de transport (T),
dispositif **caractérisé en ce que**
l'élément de guidage fixe est une articulation (61) à au moins deux degrés de liberté.

2. Dispositif ramasseur (1) selon l'une des revendications précédentes, **caractérisé en ce que**
le passage automatique de la roue (3) de la position de travail (A) à la position de transport (T) se fait en un mouvement, notamment par un seul mouvement de basculement.

3. Dispositif ramasseur (1) selon l'une des revendications précédentes, **caractérisé en ce que**
le bras de support (6) est monté sur le châssis (10) en trois points d'appui (51, 61, 91).

4. Dispositif ramasseur (1) selon l'une des revendications précédentes, **caractérisé en ce que**
un élément de support (67) est fixé au bras de support (6), cet élément bloquant la rotation du bras de support (6) dans la direction de rotation (62).

5. Dispositif ramasseur (1) selon l'une des revendications précédentes, **caractérisé en ce que**
le bras de support (6) est fixé au châssis (10) du dispositif ramasseur (1) par une entretoise (9).

6. Dispositif ramasseur (1) selon l'une des revendications précédentes, **caractérisé en ce que**
l'entretoise (9) est articulée à la fois au bras de support (6) et au châssis (10) par une articulation d'entretoise respective (91, 96) ayant au moins deux degrés de liberté.

7. Dispositif ramasseur (1) selon l'une des revendications précédentes, **caractérisé en ce qu'**il comprend
un abaisseur (11) et en position de transport (T) la roue (3) est derrière l'abaisseur (11) selon le sens de déplacement (71).

8. Machine agricole (100), notamment presse à balle, chariot chargeur ou récolteuse-hacheuse comportant un dispositif ramasseur (1) selon l'une des revendications précédentes.

9. Train comprenant un tracteur et une machine agricole (100) selon la revendication 8,
**caractérisé par**
au moins un dispositif d'actionnement (12) qui équipe le tracteur et/ou la machine agricole (100) pour le réglage de la hauteur du dispositif ramasseur (1) et/ou le réglage automatique de la roue (3) pour passer de la position de travail (A) à la position de transport (T).
